Europäisches Patentamt

European Patent Office

Office européen des brevets

(11) Publication number: **0 010 956**
**A1**

(12) # EUROPEAN PATENT APPLICATION

(21) Application number: **79302383.9**

(22) Date of filing: **31.10.79**

(51) Int. Cl.³: **F 16 D 69/02**

---

(30) Priority: **04.11.78  GB 4325178**

(43) Date of publication of application: **14.05.80**
**Bulletin 80/10**

(84) Designated Contracting States: **AT BE CH DE FR GB IT LU NL SE**

(71) Applicant: **FERODO LIMITED, 20 St. Mary's Parsonage, Manchester M3 2NL (GB)**

(72) Inventor: **Bartram, David Trevor, 28 Spinnerbottom, Birch Vale, Stockport (GB)**
Inventor: **Bridge, Malcolm, 3 Heather Bank, Littleborough, Lancs (GB)**
Inventor: **Huggett, Ralph, 28 Harridge Avenue, Shawclough Rochdale, Lancs (GB)**

(74) Representative: **Wetters, Basil David Peter et al, 20 St. Mary's Parsonage, Manchester M3 2NL (GB)**

---

(54) **Clutch facing and method for its manufacture.**

(57) A wound clutch facing is made from a glass yarn of a rough physical form and a binder. The glass yarn contains at least one continuous filament strand and may for example be a doubled yarn or a yarn having a structure in which a sliver of staple glass is wound on a continuous filament core, or a yarn with a core (8) structure out of which loops (9) project at intervals. The latter yarn can be made by a wrapping technique.

The binder can include both thermoset resin and rubber. The method for the manufacture of the clutch facings consists in first impregnating the yarn, then winding the impregnated yarn into the form of a facing and press-curing the facing.

TITLE MODIFIED   - 1 -
see front page

Improvements in or relating to Friction Materials

This invention relates to friction materials, and in particular to clutch facings of wound construction.

Conventional, asbestos containing, friction facings may be manufactured by impregnating an asbestos yarn with a drying oil or a solution of a thermo-setting resin or vulcanisable elastomer, drying to remove excess solvent and then winding to produce an annular shaped facing. The facings may be heated after winding, to harden the oil, resin or elastomer binding agent or they may be cured in a die by the application of heat and pressure. Die cured facings are often baked at elevated temperatures after curing to improve strength or friction properties.

Friction facings are commonly wound using one of the following two winding patterns:

1.   Spiral Wound

One or more ends of impregnated yarn are wound onto a circular former clamped between two large circular flanges with the simultaneous application of pressure on the wound yarn by means of a thin, circular roller free to rotate in the space between the two side flanges.

2.  Random Wound

One or more ends of impregnated yarn are wound so as to form an annular shaped facing, the yarns lying in sinusoidal or elliptical shaped patterns around the annulus and so arranged that the patterns formed by successive layers of yarns are offset from each other. Pressure is applied to the yarn during winding, sufficient to cause successive layers of yarn to adhere to each other.

Spiral wound facings possess a better burst strength (the speed at which the facing, when rotated about its centre, disintegrates under the action of centrifugal forces) than random wound facings but are more prone to splitting, in a circumferential direction, between adjacent yarns.

The present invention provides a clutch facing of wound construction comprising at least one glass yarn and a binder in which said glass yarn is a yarn of a rough physical form (as hereinafter defined) and said binder comprises a thermosetting polymeric material and serves to bond the wound yarn into the form of an annular clutch facing.

Glass filaments have a smooth outer surface so that bundles of such filaments, whether twisted or untwisted, have a surface which constitutes a series of parallel smooth filaments. We have found that in a wound clutch facing a glass yarn with such a surface is extremely difficult to consolidate into a satisfactory facing, there being a tendency for such facings to split by separation of the yarns, the binder being unable to hold them together satisfactorily in service.

By the term "rough physical form" we mean having a shape or surface form, or both, which provides interstices in the yarn such as to enable the binder to key into the yarn.

The form of such yarns also bridges resin-rich areas in the facing, improving interlaminar strength.

The minimum requirement for this form we believe to be fulfilled by a doubled yarn construction in which two or more twisted continous filament glass fibre strands or rovings are doubled together.

Preferably, however, the yarn has a rough surface produced by at least a portion of the surface being staple glass fibre sliver, in which the individual fibres are non parallel, although the yarn should contain continuous filaments of glass as well as the staple fibre, or the yarn itself has a rough shape e.g. a yarn formed by doubling or by a wrapping technique in which one component is overfed to give rise to side loops extending laterally from the yarn.

Two examples of yarns which are of the preferred types are:

(a)    Yarns consisting of staple glass sliver wrapped around a core of continous filament glass strands and consolidated either by a fine synthetic fibre yarn around the resulting bundle, or by twisting.

(b)    Yarns comprising a core structure comprising one or more strands and, arising out of said structure at intervals, loops of predetermined size, said core structure and/or said loops comprising at least one strand of continuous filament glass.  Such yarns may be made by fancy doubling techniques.

In essence in fancy doubling , one or more yarns, strands or slivers (the 'effect' yarns) are fed forward into the twisting zone of a yarn twisting frame faster than one or more other yarns, strands or slivers (the 'core' yarns), thereby forming loops as the components are twisted together. Traditionally, this is performed using two sets of nip rollers running at different speeds and the product is wound up directly onto a conventional spinning package. More recently a variant on this process has been developed whereby the yarn, while in its twisted state, is helically wrapped with a fine binder thread and the twist then released, i.e. it is merely false-twisted. This method has general advantages over the traditional one in terms of speed and versatility but affords a particular benefit in the production of glass yarns. Because of the stiffness of glass, yarns made from it tend to exhibit twist-liveliness at much lower twist levels than natural and syntheic organic fibres and 'fancy' yarns made by the traditional method require stabilising by doubling with at least one similar yarn before they can readily be handled. Yarns made by the wrapping method, by contrast, have no net twist and are thus stable without further processing. This method is, therefore, preferred.

The process cannot be simplified by omitting the false-twisting step and merely wrapping a number of threads fed forward at different speeds because under such conditions the loop size and frequency become irregular. Uniformity of loop size and distribution is greatly improved by the presence of at least two core yarns.

As will readily be appreciated, the size and frequency of loops depends on the degree of overfeed of the effect yarns (usually expressed as a % on the core speed) and the twist inserted. To a first approximation the greater the overfeed the larger the loops and the higher the twist the more frequent and smaller the loops. Superimposed on this basic pattern there is a tendency for the excess effect yarn to be held back from the twisting point by centrifugal forces, being caught intermittently to form larger and less frequent loops than would be expected. Regularity can be improved by the use of a number of fine effect yarns rather than a single coarse one and by the use of the softest effect yarns available.  In the case of glass yarns this means that the most regular products are obtained by using as effect yarns a number of low tex strands of minimum filament diameter having a soft, lubricious dressing.  In fact, compromise is necessary as such materials tend to be (a) expensive and (b) of less than ideal compatibility with the kind of resin systems likely to be used as binders in the clutch facings to be made from the yarn, e.g. phenol-formaldehyde resins.

The twisting frames used for the production of "fancy" doubled yarns are well-known and available from a number of manufacturers.

The machine for carrying out the preferred wrapping method is illustrated in the accompanying drawings of which

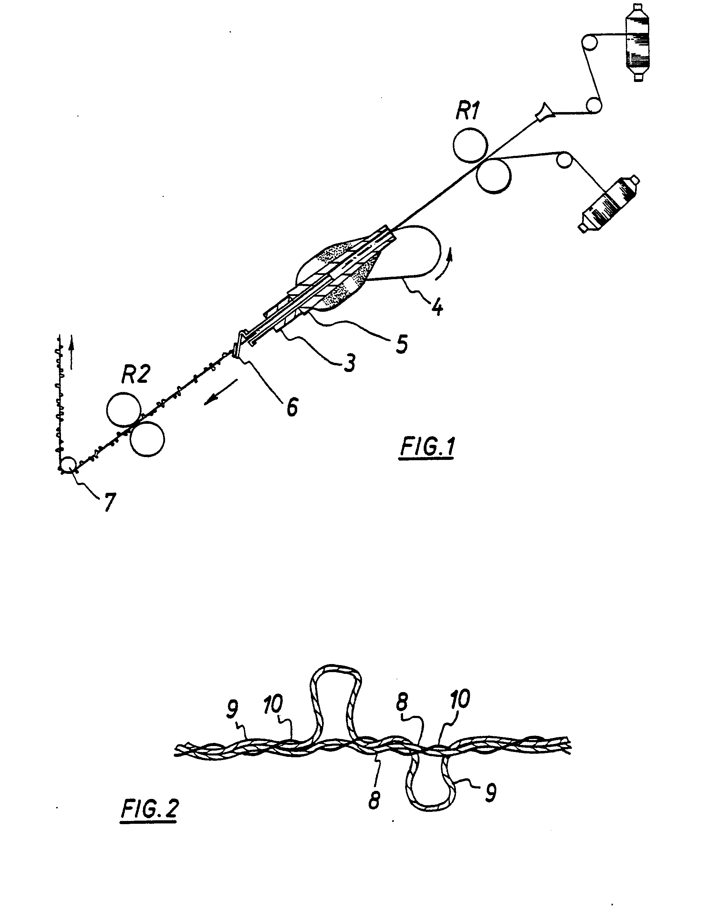

Figure 1 is a diagrammatic representation of the wrapping machine and

Figure 2 is a schematic illustration of a looped structure yarn produced thereby.  Referring to Figure 1 the core yarns are drawn under tension through grooves cut in the nip rollers R1 by the nip rollers R2 and the effect components are overfed by the nip (R1). Alternatively, the cores can pass under, or to the side of the nip (R1).  Twist is inserted in the yarn between the twist trap 6, rotating with the spindle 3, and the nip (R1) and the yarn is wrapped inside the spindle by yarn 4 drawn from the pirn 5, also mounted on and rotating with the spindle.  The twist is removed between the twist trap 6 and the nip R2 and the yarn then passes round a guide pulley 7 and is wound up (not shown).  The overfeed can be adjusted by alteration of the speed of nip (R1) relative to the overall machine speed governed by the nip (R2).

Such a machine is commercially obtainable from Gemmill and Dunsmore Ltd. of Preston. An idealised yarn structure with one core 8, one effect yarn 9 and a binder thread 10 is shown in Fig. 2.

The overfeed of the "effect" yarns is preferably limited to the range 10% to 100% and the wrapper ie binder thread, to 5% of the total yarn weight.

The glass fibre yarn or strand is impregnated by passing it through a bath containing a solution or dispersion of the binder and removing excess impregnant to produce the desired impregnant pickup. Excess impregnant may be removed by means of nip rollers, felt wipers or compressed air doctor or any other suitable device. Solvent or other fluid phase is removed by passing the yarn through an oven or up a drying tower in which hot air is circulated. A desired state of precure of the binder may be achieved by controlling the air temperature and the time of residence of the yarn in the drying tower or oven. The dried yarn is then wound onto bobbins of convenient size.

Annular shaped friction facings are manufactured by winding the impregnated and dried yarn in either a spiral or random pattern by any convenient means. The facings may be heated in an oven, if desired, to advance the state of cure of the binder material or to remove any remaining volatile matter. The facings are then cured in an enclosed die or mould, with the application of heat and pressure, to consolidate the facings and harden the binder material. After press curing, the facings may be baked, at temperatures usually in the range of 150° to 250°C, to further advance the state of cure of the resin and/or to improve the friction properties of the completed facing. During baking, the facings are normally clamped between two rigid metal flanges to prevent any distortion thus maintaining flatness in the finished facing. The facings may be coated with a release agent, if required, to prevent adhesion whilst clamped together during baking. Finely ground talc has been found satisfactory for this purpose. The facings are then ground on each face, e.g. using a double disc grinder, to produce the desired thickness. The inner and outer edges may be machined to the required dimensions or the facing used without machining if accurately moulded to the correct dimensions.

## Impregnant System

The preferred method of impregnating the glass yarns used in this invention comprises two stages as follows:

(a) The yarn is impregnated with a dilute solution of thermosetting resin which binds together the individual glass filaments and improves adhesion of the secondary binder to the glass filaments. Whilst solutions of phenol-formaldehyde resins may be used, materials with improved surface finish and appearance are obtained using solutions of cashew modified phenol-formaldehyde resins. Cashew modified phenolic resins are much less brittle than unmodified phenolic resins; grinding of materials containing cashew modified resins does not appear to cause crazing of the resin and loosening of the glass fibres at the surface of the material.

(b) After impregnating with a resin solution and drying, the yarn is re-impregnated with a more viscous solution or dispersion of a natural or synthetic elastomer which may also contain a thermosetting resin. The yarn must, after drying to remove solvent, possess sufficient 'tack' to enable it to adhere to itself when subjected to pressure during the winding operation but not stick when wound onto a storage reel. Curing agents are added to the impregnant to cause hardening of the elastomer during press curing of the wound facings. Rubber reinforcing agents, e.g. carbon black and phenolic resins may be added to improve strength. Tackifiers, such as are commonly used in the rubber industry, may be added to improve the tackiness of the impregnated yarn. Friction modifiers, wear improving materials and fillers may be also added to the impregnant if desired.

This method of impregnation is the subject of our co-pending UK patent application No. 42349/78 filed on even date herewith. The invention is now illustrated by means of detailed Examples.

## Examples

The following impregnation system has been used in all the examples to be described. The primer coating resin solution was diluted with methylated spirits to control the final dry resin content of the impregnated glass yarn. The impregnated yarn was dried after primer coating with resin and secondary coating with the rubber based dope.

## Primer Coating

Cashew modified phenol formaldehyde resin of 54 - 56% solids content, viscosity 110 - 140 centipoise at 25°C and a test-tube cure time of five minutes at 150°C, was diluted with industrial methylated spirits to suit the particular yarn to be impregnated.

## Secondary Coating

| | | |
|---|---|---|
| Styrene-Butadiene Rubber S1006 | 21.4 | parts by weight |
| Mineral Rubber | 4.1 | " |
| Carbon Black H.A.F. | 18.1 | " |
| Graphite Powder | 6.1 | " |

| Barytes | 14.1 parts of weight |
|---|---|
| Sulphur | 10.5 " |
| Litharge | 22.7 " |
| Coumarone-Indene Resin | 3.0 " |
| Phenol-Formaldehyde Resin  Powder 5.35 | " |

The materials in the above formulation were mixed until well blended using a Baker Perkins Shearmix, disintegrated in a rotating knife cutter and dispersed in naphtha, using a high speed mixer, to produce a dispersion of 40% solids.  The primer coated yarn was then impregnated with this dispersion and dried to remove the naphtha solvent.

Random wound clutch facings were then made for test purposes from various glass yarns impregnated as above.  The details are as follows:

Example 1

Glass yarn constructed from ECR 333 'E' glass strand commercially available from TBA Industrial Products Ltd. Four ends of 304 tex strand (800 filaments per strand) twisted together with Z twist of 55.1 turns per metre then two yarns so produced twisted together with S twist of 39.4 turns per metre.  The yarn was primer coated with resin diluted two volumes of resin to three volumes of methylated spirits to give a dry pickup of 25% by weight.

Secondary coating gave 16% pickup.  Facings were random wound by hand, press cured in a closed die for ten minutes at 150°C, clamped together between rigid plates and baked for four hours at 180°c.  Facings were machined to 203.2mm outside diameter x 146.05mm inside diameter x 3.2mm thickness and drilled for rivet holes.  Such facings burst at greater than 20,000 r.p.m. at ambient temperature and 15,000 - 17,000 r.p.m. at 200°C.

## Example 2

Yarn constructed by twisting one end of the 304 tex ECR 333 strand with 39.4 turns per metre, S twist, then twisting two of the yarns so produced together with a Z twist of 110.2 turns per metre and finally twisting four two-ply yarns together with 39.4 turns per metre S. twist. The yarn was impregnated and facings manufactured as in Example 1. Primer coat pickup was 19% by weight and secondary coat pickup was 26%. Such facings burst at greater than 20,000 r.p.m. at ambient temperature and 15,000 - 17,500 r.p.m. at 200°C.

## Example 3

Yarn constructed by overfeeding 3 ends of the 304 tex ECR 333 strand onto two ends of same and wrapping the whole with a 10 tex nylon yarn at a frequency of about 158 turns per metre to produce a yarn of approximately 1750 tex. This yarn was impregnated and facings manufactured as in Example 1. Primer coat pickup was 36% by weight and secondary coat pickup was 55%. Such facings burst at 16,000 - 19,000 r.p.m. at ambient temperature and 13,500 - 14,000 r.p.m. at 200°C.

## Example 4

Yarn constructed by wrapping one end of 500 tex staple glass sliver (average staple length approximately 50 cms) around 6 ends of 304 tex ECR 333 glass strand and wrapping the whole with a 10 tex nylon yarn at a frequency of about 197 turns per metre. This yarn was primer coated with the cashew modified resin diluted one volume of resin to three volumes of methylated spirits, giving a dry resin pickup of 16% by weight. Secondary coating gave 29% pickup by weight. Facings were then completed as in Example 1.

0010956

The facings burst at 19,500 to greater than 20,000 r.p.m. at ambient temperature and 15,250 - 17,500 r.p.m. at 200°C.

Example 5

Yarn constructed by wrapping three ends of 500 tex staple glass sliver (average staple length approximately 50 cms) with one end of 10 tex nylon yarn. This yarn was primer coated with the cashew modified resin diluted one volume of resin to three volumes of methylated spirits, giving a dry resin pickup of 61% weight. Secondary coating gave 82% pickup by weight. Facings were then completed as in Example 1. The facings burst at 12,000 - 12,750 r.p.m. at ambient temperature.

WHAT WE CLAIM IS:

1.  A clutch facing of wound construction comprising at least one glass yarn and a binder in which said glass yarn is a yarn of a rough physical form (as hereinafter defined) and said binder comprises a thermosetting polymeric material and serves to bond the wound yarn into the form of an annular clutch facing.

2.  A clutch facing according to Claim 1 in which the yarn has a rough surface produced by at least a portion of the surface being staple glass fibre sliver, in which the individual fibres are non-parallel.

3.  A clutch facing according to Claim 1 or 2 in which the yarn has a rough shape in which side loops extend laterally from the yarn.

4.  A clutch facing according to claim 2 in which the glass yarn consists of staple glass sliver wrapped around a core of continuous filament glass strands consolidated either by wrapping a fine synthetic fibre yarn around the resulting bundle or by twisting.

5.  A clutch facing according to claim 3 in which the glass yarn comprises a core structure comprising one or more strands and, arising out of said structure at intervals, loops of predetermined size said core structure and/or said loops comprisig at least one strand of continuous filament glass.

6.  A clutch facing according to claim 5 in which said glass yarn is one produced by a wrapping technique in which one component of the core is overfed to give rise to side loops and the core structure is wrapped with a binder thread to stabilize the structure.

- 2 -    0010956

7.  A clutch facing according to any one of the preceding claims in which the binder comprises a cured natural or synthetic rubber and a thermoset resin.

8.  A method for the manufacture of a clutch facing which comprises impregnating a glass yarn of a rough physical form (as hereinbefore defined) with a curable binder composition, winding said yarn into the form of a clutch facing and pressing and curing said clutch facing.

9.  A method according to claim 8 in which the yarn has a rough shape in which side loops extend laterally from the yarn.

10.  A method according to claim 8 or 9 in which the glass yarn is impregnated by a two stage process, the first stage comprising impregnation with a solution of a thermosetting resin, which is dried and the second stage comprising by impregnation with a more viscous solution or dispersion of a curable natural or synthetic elastomer.

11.  A clutch facing substantially as described herein in any one of the foregoing Examples.

12.  A method for the manufacture of a clutch facing substantially as described herein in the foregoing Examples.

0010956

FIG.1

FIG.2

| DOCUMENTS CONSIDERED TO·BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | GB - A - 1 374 710 (JOHNS-MANVILLE)<br>* complete document * | 1,4,7,<br>8,10 | F 16 D 69/02 |
| | — | | |
| | DE - U - 7 719 200 (BERAL)<br>* complete document * | 1,2,7,<br>8,10 | |
| | — | | |
| | DE - A1 - 2 708 488 (BERAL)<br>* complete document * | 1,8,10 | |
| | — | | **TECHNICAL FIELDS SEARCHED (Int.Cl.³)** |
| | GB - A - 1 250 149 (BENDIX)<br>* complete document * | 1,2 | |
| | — | | |
| | DE - U - 1 997 960 (REX)<br>* page 2, line 21 to page 3, line 2 * | 6 | C 08 J 5/00<br>F 16 D 69/00 |
| | — | | |
| A | US - H - 941 012 (MARZOCCHI)<br>— | | |
| A· | US - A - 2 901 388 (MORTON)<br>— | | |
| A | US - A - 2 555 261 (WALTERS)<br>———— | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search<br>Berlin | Date of completion of the search<br>17-01-1980 | Examiner<br>LUDWIG | |